# EUROPEAN PATENT APPLICATION

(11) **EP 4 135 439 A1**
(43) Date of publication of application: **15.02.2023**
(21) Application number: 20930235.5
(22) Date of filing: 09.04.2020
(51) Int. Cl.: H04W 72/04

(54) **TERMINAL, WIRELESS COMMUNICATION METHOD AND BASE STATION**

(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP); GUO, Shaozhen, Beijing 100190 (CN); WANG, Jing, Beijing 100190 (CN); HOU, Xiaolin, Beijing 100190 (CN)
(74) Representative: Hoffmann Eitle
(86) International application number: PCT/JP2020/015958
(87) International publication number: WO 2021/205599

(57) **Abstract**

A terminal according to an aspect of the present disclosure includes a control section that uses, for radio link monitoring, one or more reference signals for active transmission configuration indication (TCI) states associated with one or more first control resource sets (CORESETs), in a case that a CORESET pool index of 0 is not configured for the one or more first CORESETs, a CORESET pool index having a value other than 0 is configured for one or more second CORESETs, and a radio link monitoring-reference signal (RLM-RS) is not configured, and a receiving section that receives the one or more reference signals. According to an aspect of the present disclosure, the radio link can be appropriately monitored.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In existing LTE systems (LTE) Rel. 8 - Rel. 14), monitoring of a radio link quality (radio link monitoring (RLM) is performed. Once a radio link failure (RLF) is detected based on the RLM, Radio Resource Control (RRC) connection re-establishment is requested with respected to a user terminal (User Equipment (UE)).

A study is underway to use the RLM also in future radio communication systems (for example, NR). In NR, a base station may configure a radio link monitoring reference signal (RS) (RLM-RS) per BWP for a UE through higher layer signaling.

In a case that parameters for the RLM-RS are not provided, the UE may use an RS provided for an active TCI state for PDCCH reception as the RLM-RS. Here, the UE may determine the RLM-RS based on a search space set having the shortest monitoring periodicity in some cases.

However, in the case that the UE is not provided with the parameters for the RLM-RS, how the UE determines the parameters may not be clear in some cases. If such an operation is not clear, a discrepancy for the parameters may be caused between the base station and the UE to reduce a performance of the RLM and reduce communication throughput.

Then, an object of the present disclosure is to provide a terminal, a radio communication method, and a base station capable of appropriately monitoring a radio link.

### Solution to Problem

A terminal according to an aspect of the present disclosure includes a control section that uses, for radio link monitoring, one or more reference signals for active transmission configuration indication (TCI) states associated with one or more first control resource sets (CORESETs), in a case that a CORESET pool index of 0 is not configured for the one or more first CORESETs, a CORESET pool index having a value other than 0 is configured for one or more second CORESETs, and a radio link monitoring-reference signal (RLM-RS) is not configured, and a receiving section that receives the one or more reference signals.

### Advantageous Effects of Invention

According to an aspect of the present disclosure, the radio link can be appropriately monitored.

### Brief Description of Drawings

FIG. 1 is a diagram to illustrate an example of a multi-TRP scenario;
FIG. 2 is a diagram to illustrate an example of an RLM-RS determination according to Embodiment 1;
FIG. 3 is a diagram to illustrate another example of the RLM-RS determination according to Embodiment 1;
FIG. 4 is a diagram to illustrate an example of a schematic structure of a radio communication system according to one embodiment;
FIG. 5 is a diagram to illustrate an example of a structure of a base station according to one embodiment;
FIG. 6 is a diagram to illustrate an example of a structure of a user terminal according to one embodiment; and
FIG. 7 is a diagram to illustrate an example of a hardware structure of the base station and the user terminal according to one embodiment.

### Description of Embodiments

### (M ulti-TRP)

For NR, a study is underway that one or a plurality of transmission/reception points (TRPs) (multi-TRP (MTRP)) use one or a plurality of panels (multi-panel) to perform DL transmission to the UE. A study is underway that the UE uses one or a plurality of panels to perform UL transmission to one or the plurality of TRPs.

Note that the plurality of TRPs may correspond to the same cell identifier (cell ID), or different cell IDs. The cell ID may be a physical cell ID, or a virtual cell ID.

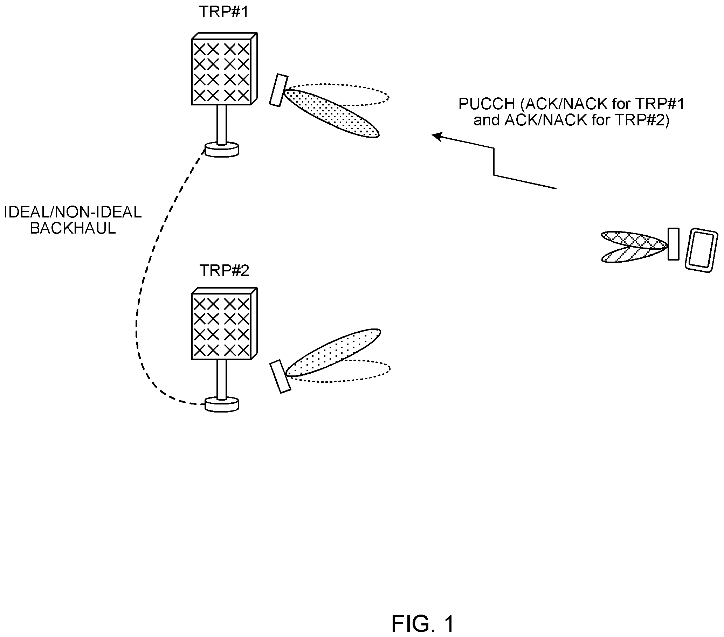

FIG. 1 is a diagram to illustrate an example of a multi-TRP scenario. In these examples, assume that each TRP and a UE can use two different beams, without limitation.

The multi-TRP (TRP #1, TRP #2) may be connected by an ideal/non-ideal backhaul to communicate information, data, or the like. From the respective TRPs of the multi-TRP, different codewords (code words, CW) and different layers may be transmitted. A non-coherent joint transmission (NCJT) may be used as one form of multi-TRP transmission.

In the NCJT, for example, TRP #1 performs modulation mapping and layer mapping on a first codeword, and uses a first precoding and a first number of layers (for example, two layers) to transmit a first PDSCH. TRP #2 performs modulation mapping and layer mapping on a second codeword, and use a second precoding and a second number of layers (for example, two layers) to transmit a second PDSCH.

Note that a plurality of PDSCHs (multi-PDSCH) on which NCJT is performed may be defined to partially or entirely overlap in at least one of time and frequency domains. In other words, the first PDSCH from a first TRP and the second PDSCH from a second TRP may overlap each other in at least one of the time and frequency resources.

These first and second PDSCHs may be assumed to be not in a quasi-co-location (QCL) relation (or to be not quasi-co-located) with each other. A reception of the multi-PDSCH may be interpreted as simultaneous reception of PDSCH of a type other than a given QCL type (for example, QCL type D).

A plurality of PDSCHs (also referred to as multi-PDSCH (multiple PDSCH)) from the multi-TRP may be scheduled by using one DCI (single DCI, single PDCCH) (single master mode). A plurality of PDSCHs from the multi-TRP may be scheduled respectively by using a plurality of DCIs (multi-DCI, multi-PDCCH (multiple PDCCH)) (multi-master mode).

Such a multi-TRP scenario achieves a more flexible transmission control using a good quality channel.

To support multi-PDCCH based multi-TRP transmission with intra-cell (having the same cell ID) and inter-cell (having different cell IDs), one control resource set (CORESET) in PDCCH configuration information (PDCCH-Config) may correspond to one TRP in RRC configuration information for linking multiple PDCCH and PDSCH pairs with multi-TRP.

In NR Rel. 15, the maximum number of CORESETs per PDCCH configuration information is three. In a multi-PDCCH based multi-TRP operation, the maximum number of CORESETs per PDCCH configuration information or BWP may be increased to five depending on UE capability.

### (TCI State for PDCCH)

Information related to QCL between a PDCCH (or a DMRS antenna port associated with the PDCCH) and a given RS may be referred to as a TCI state for PDCCH or the like.

The UE may determine the TCI state for UE-specific PDCCH (CORESET), based on higher layer signaling. For example, one or a plurality of (K) TCI states (list) per CORESET may be configured for the UE through RRC signaling.

In the UE, one of the plurality of TCI states configured through RRC signaling may be activated by the MAC CE for each CORESET. The MAC CE may be referred to as a TCI state indication for UE-specific PDCCH MAC CE. The UE may monitor the CORESET on the basis of the active TCI state corresponding to the CORESET.

### (RLM)

In NR also, radio link monitoring (RLM) is used.

In NR, a base station may configure a radio link monitoring reference signal (RS) (RLM-RS) per BWP for a UE through higher layer signaling. The UE may receive configuration information for RLM (for example, an RRC information element "RadioLinkMonitoringConfig").

The configuration information for RLM may include resource configuration information for failure detection (for example, a higher layer parameter "failureDetectionResourcesToAddModList"). The resource configuration information for failure detection may include a parameter for the RLM-RS (for example, a higher layer parameter "RadioLinkMonitoringRS").

The parameters for the RLM-RS may include information indicating correspondence to an RLM purpose, an index corresponding to an RLM-RS resource (for example, an index included in a higher layer parameter "failureDetectionResources"), and the like. The index may be, for example, a CSI-RS resource configuration index (for example, a non-zero power CSI-RS resource ID) or an SS/PBCH block index (SSB index).

The UE may specify an RLM-RS resource, based on the index corresponding to the RLM-RS resource (RLM-RS selection operation, RLM-RS determination rule), to perform the RLM using the RLM-RS resource.

If the UE is not provided with RadioLinkMonitoringRS (RLM-RS) and the UE is provided with the TCI state including one or more CSI-RSs for the PDCCH reception, the UE may follow a procedure below.
- If the active TCI state for PDCCH reception includes only one RS, the UE uses for the RLM the RS provided to the TCI state for the active TCI state for PDCCH reception.
- If the active TCI state for PDCCH reception includes two RSs, the UE expects that one RS has the QCL type D and the UE uses the RS having the QCL type D for the RLM. The UE does not expect that both the RSs have the QCL type D (not expected).
- The UE is not required to use an aperiodic or semi-persistent RS for the RLM.
- For Lₘₐₓ(the maximum number of SS/PBCH block candidates per half frame) = 4, the UE selects N_{RLM} RSs provided for the active TCI states for PDCCH receptions within the CORESETs associated with the search space sets in an order of the search space sets from the shortest monitoring periodicity. If more than one CORESETs are associated with the search space sets having the same monitoring periodicity, the UE determines the order of the CORESETs from the highest CORESET index. The UE may select N_{RLM} RSs in accordance with the order of the CORESETs.

In the case that the UE is not provided with RadioLinkMonitoringRS, the UE may not expect to use more than N_{RLM} RadioLinkMonitoringRS for the RLM.

In a case of Lₘₐₓ = 4, N_{RLM} may be N_{RLM} = 2. In a case of Lₘₐₓ = 8, N_{RLM} may be N_{RLM} = 4. In a case of Lₘₐₓ = 64, N_{RLM} may be N_{RLM} = 8.

In the case that the UE is not provided with the information of RLM reference signal (RS) (for example, RadiolinkMonitoringRS), the UE determines the RLM-RS based on the TCI state for PDCCH. The number of RLM-RSs has to be N_{RLM} or less.

In Rel. 16, up to five CORESETs are configured for the multi-TRP transmission based on the multi-PDCCH (multi-DCI). A CORESET pool index (CORESETPoollndex) is configured for each CORESET.

In the case that the UE is not provided with the information of RLM-RS (in a case that the UE is not explicitly notified of the information of RLM-RS), the following Problems 1 and 2 are conceivable for how the UE determines the RLM-RS.

### <Problem 1>

NR Rel. 15 only defines the RLM-RS determination (narrowing) rule (UE operation) for the case of the Lₘₐₓ of 4 in the case that N_{RLM} is 2 and the maximum number of CORESETs is 3. In Rel. 16, the maximum number of CORESETs is 5, while the RLM-RS determination rule is not clear for the case of Lₘₐₓ = 4 and N_{RLM} = 2, and the case of Lₘₐₓ = 8 and N_{RLM} = 4.

### <Problem 2>

In NR Rel. 15, the UE determines the CORESET having the TCI state used for the RLM-RS, based on two factors below.
- The monitoring periodicity of the search space associated with the CORESET (in the order from the shortest monitoring periodicity)
- The CORESET ID (in the order from the highest CORESET ID in the case that there are more than one CORESETs corresponding to the same monitoring periodicity)

However, information for the TRP is not taken into account in the RLM-RS determination. In a case that the RLM-RS determined by the UE based on the rule in NR Rel. 15 corresponds to only any one of the TRPs, the RLM-RS may be possibly selected from two TRPs at random. This may not be possibly reasonable with respect to multi-PDSCH transmission based on the multi-PDCCH in the multi-TRP scenario.

The CORESET pool indices may not be configured for some CORESETs. For example, the CORESET pool indices are not configured for CORESETs #1 and #2, and the CORESET pool index having a value of 1 is configured for CORESET #3. In this case, which CORESET is used is not clear.

If the determination method of the RLM-RS is not clear, the RLM may not be appropriately performed to reduce a system performance.

Thus, the inventors of the present invention came up with the idea of the determination method of the RLM-RS in the case that the UE is not provided with the RLM-RS (in the case that the UE is not explicitly configured with the RLM-RS through RRC signaling).

In the present disclosure, "A/B" and "at least one of A and B" may be interchangeably interpreted.

In the present disclosure, a panel, an Uplink (UL) transmission entity, a TRP, a spatial relation, a control resource set (CORESET), a PDSCH, a codeword, a base station, an antenna port of a signal (for example, demodulation reference signal (DMRS) port), an antenna port group of a signal (for example, DMRS port group), a group for multiplexing (for example, code division multiplexing (CDM) group, reference signal group, CORESET group), a CORESET pool, a CW, a redundancy version (RV), and a layer (MIMO layer, transmission layer, spatial layer) may be interchangeably interpreted. A panel Identifier (ID) and a panel may be interchangeably interpreted. In the present disclosure, a TRP ID and a TRP may be interchangeably interpreted.

In the present disclosure, an index, an ID, an indicator, a resource ID, and the like may be interchangeably interpreted.

In the present disclosure, a cell, a CC, a carrier, a BWP, an active DL BWP, an active UL BWP, and a band may be interchangeably interpreted. In the present disclosure, an RRC parameter, a higher layer parameter, an RRC information element (IE), and an RRC message may be interchangeably interpreted.

In the present disclosure, lowest, highest, minimum, a maximum may be interchangeably interpreted. In the present disclosure, shortest, longest, minimum, and maximum may be interchangeably interpreted.

In the present disclosure, a beam, a TCI state, a QCL assumption, a QCL parameter, a spatial domain reception filter, a UE spatial domain reception filter, a UE receive beam, a DL receive beam, a DL precoding, a DL precoder, a DL-RS, a QCL type D RS in a TCI state or QCL assumption, and a QCL type A RS in a TCI state or QCL assumption, may be interchangeably interpreted. In the present disclosure, a QCL type X-RS, a DL-RS associated with a QCL type X, a DL-RS having a QCL type X, a source of a DL-RS, an SSB, and a CSI-RS may be interchangeably interpreted.

### (Radio Communication Method)

In the present disclosure, the UE configured with a plurality of TRPs may determine at least one of a TRP corresponding to the DCI, a TRP corresponding to a PDSCH or UL transmission (PUCCH, PUSCH, SRS, or the like) scheduled by the DCI, and the like, based on at least one of the following items.
- A value of a given field included in the DCI (for example, a field specifying the TRP, an antenna port field, PRI).
- A DMRS corresponding to a scheduled PDSCH/PUSCH (for example, a sequence, resource, CDM group, DMRS port, DMRS port group, and antenna port group for the DMRS, or the like).
- A DMRS corresponding to a PDCCH on which the DCI is transmitted (for example, a sequence, resource, CDM group, DMRS port, and DMRS port group for the DMRS, or the like).
- A CORESET receiving the DCI (for example, a CORESET pool ID of the CORESET, an ID of the CORESET, a scramble ID (that is may be interpreted as a sequence ID), a resource, or the like).
- An RS used for a TCI state, a QCL assumption, spatial relation information, or the like (an RS related group, or the like).

In the present disclosure, the single PDCCH (DCI) may be referred to as the PDCCH (DCI) of a first scheduling type (for example, a scheduling type A (or type 1)). The multi-PDCCH (DCI) may be referred to as the PDCCH (DCI) of a second scheduling type (for example, a scheduling type B (or type 2)).

In the present disclosure, the single PDCCH may be assumed to be supported in a case that an ideal backhaul is used by the multi-TRP. The multi-PDCCH may be assumed to be supported in a case that a non-ideal backhaul is used between the multi-TRP.

Note that the ideal backhaul may be referred to as DMRS port group type 1, reference signal related group type 1, antenna port group type 1, CORESET pool type 1, or the like. The non-ideal backhaul may be referred to as DMRS port group type 2, reference signal related group type 2, antenna port group type 2, CORESET pool type 2, or the like. The names are not limited to those above.

### <Embodiment 1>

The determination method of the RLM-RS in the case that the UE is not provided with the RLM-RS (RLM-RS selection operation, RLM-RS determination rule) may be different depending on the configuration of the CORESET pool index.

For the RLM-RS, the UE may follow procedures 1 and 2 below

### {Procedure 1}

If the UE is not provided with RadioLinkMonitoringRS (RLM-RS) and the UE is provided with the TCI state including one or more CSI-RSs for the PDCCH reception, the UE may follow procedures 1-1 to 1-4 below.

### {{Procedure 1-1}}

If the active TCI state for PDCCH reception includes only one RS, the UE uses for the RLM the RS provided to the TCI state for the active TCI state for PDCCH reception.

### {{Procedure 1-2}}

If the active TCI state for PDCCH reception includes two RSs, the UE expects that one RS has the QCL type D and the UE uses the RS having the QCL type D for the RLM. The UE does not expect that both the RSs have the QCL type D (not expected).

### {{Procedure 1-3}}

The UE is not required to use an aperiodic or semi-persistent RS for the RLM.

### {{Procedure 1-4}}

For Lₘₐₓ(the maximum number of SS/PBCH block candidates per half frame) = 4, the UE selects N_{RLM} RSs provided for the active TCI states for PDCCH receptions within the CORESETs associated with the search space sets in an order of the search space sets from the shortest monitoring periodicity (in ascending order of the monitoring periodicity). If more than one CORESETs are associated with the search space sets having the same monitoring periodicity, the UE determines the order of the CORESETs from the highest CORESET index (in descending order of the CORESET index). The UE may select N_{RLM} RSs in accordance with the order of the CORESETs.

### {Procedure 2}

If the UE satisfying conditions 2-1 and 2-2 below is not provided with RMS-RS information (RadioLinkMonitoringRS) and the UE is provided with the TCI state including one or more CSI-RSs for the PDCCH reception, the UE may follow procedures 2-1 to 2-4 below.

### {{Condition 2-1}}

The UE is not provided with the CORESET pool index(es) (CORESETPoollndex) for (one or more) first CORESET(s) on (one or more) active DL BWP(s) of (one or more) serving cell(s), or the UE is provided with the CORESET pool index having a value of 0 for the (one or more) first CORESET(s) on the active DL BWP(s) of the serving cell(s).

### {{Condition 2-2}}

The UE is provided with the CORESET pool index having a value of 1 for (one or more) second CORESET(s) on (one or more) active DL BWP(s) of (one or more) serving cell(s).

### {{Procedure 2-1}}

If the active TCI state for PDCCH reception includes only one RS, the UE uses for the RLM the RS provided to the TCI state for the active TCI state for PDCCH reception within the first CORESET.

### {{Procedure 2-2}}

If the active TCI state for PDCCH reception within the first CORESET includes two RSs, the UE expects that one RS has the QCL type D and the UE uses the RS having the QCL type D for the RLM. The UE does not expect that both the RSs have the QCL type D.

### {{Procedure 2-3}}

The UE is not required to use an aperiodic or semi-persistent RS for the RLM.

### {{Procedure 2-4}}

For Lₘₐₓ = 4, the UE selects, in an order of the search space sets from the shortest monitoring periodicity, N_{RLM} RSs provided for the active TCI states for PDCCH receptions within the first CORESETs associated with the search space sets. If more than one CORESETs within the first CORESETs are associated with the search space sets having the same monitoring periodicity, the UE determines the order of the CORESETs from the highest CORESET index. The UE may select N_{RLM} RSs in accordance with the order of the CORESETs.

The CORESET pool index configured for the second CORESET may not be 1, and may be other than 0 or equal to or more than 1.

The CORESET pool index for at least one of the first CORESET and the second CORESET may be provided by the PDCCH configuration information.

In the present disclosure, PDCCH configuration information (PDCCH-Config) and a CORESET list (controlResourceSetToAddModList) may be interchangeably interpreted.

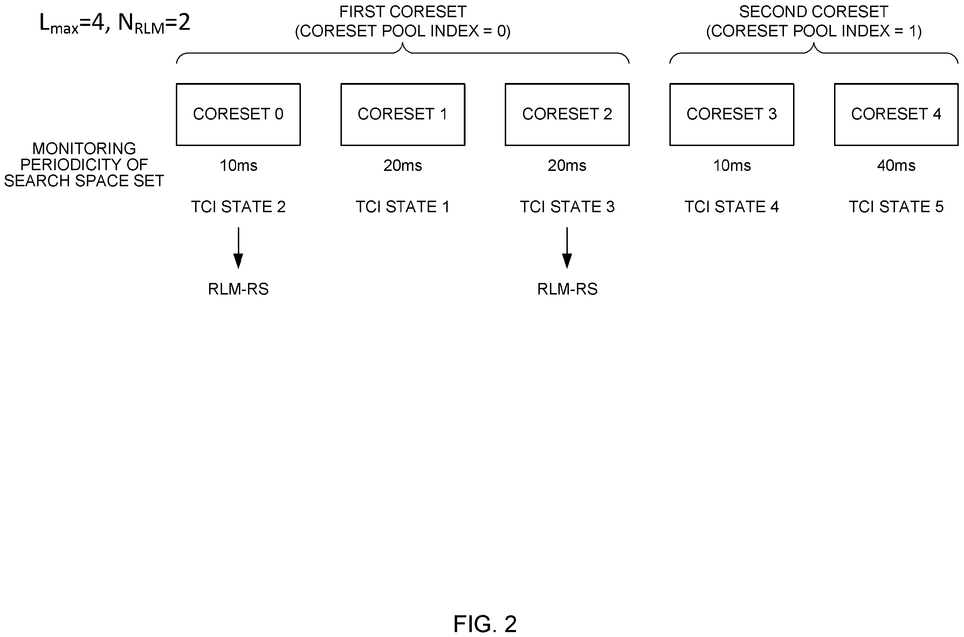

In an example in FIG. 2, CORESET pool 0 (the first CORESET) having the CORESET pool index of 0 corresponds to TRP 0 and includes CORESETs 0, 1, and 2. CORESET pool 1 having the CORESET pool index of 1 corresponds to TRP 1 and includes CORESETs 3 and 4. The monitoring periodicities for the search space sets associated with CORESETs 0, 1, 2, 3, and 4 are 10, 20, 20, 10, and 40 ms, respectively. The active TCI states for PDCCH in CORESETs 0, 1, 2, 3, and 4 are the TCI states 2, 1, 3, 4, and 5, respectively.

In this example, Lₘₐₓ = 4 and N_{RLM} = 2.

CORESET pool 0 (the first CORESET) has the lowest CORESET pool index, and thus, the UE selects, of the CORESETs in CORESET pool 0 (the first CORESET), the TCI state 2 for PDCCH within CORESET 0 associated with the search space set having the shortest monitoring periodicity of 10 ms in the order of the monitoring periodicities. CORESETs 1 and 2 in CORESET pool 0 (the first CORESET) are associated with the search space sets having the same monitoring periodicity of 20 ms, and thus, the UE selects the TCI state 3 for PDCCH within CORESET 2 in the order from the highest CORESET index. In accordance with this procedure, the UE determines the RSs of the selected the TCI states 2 and 3 as N_{RLM} (two) RLM-RSs.

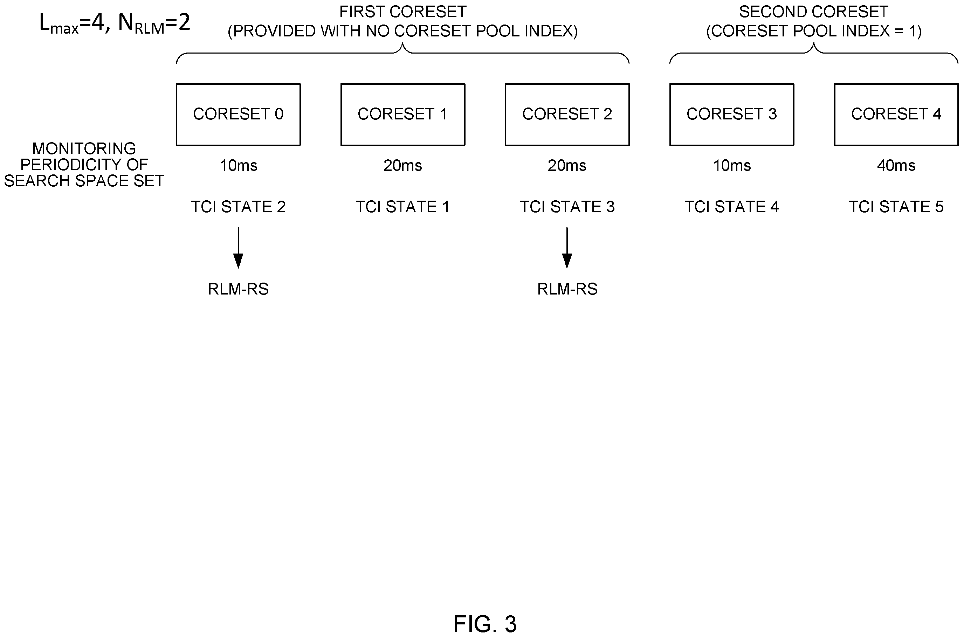

In an example in FIG. 3, the first CORESET not configured with the CORESET pool index includes CORESETs 0, 1, and 2. Other configurations and procedures are similar to FIG. 2.

According to Embodiment 1 described above, the UE can appropriately select the RLM-RS even in the case of being configured with the CORESET pool index. The UE can appropriately select the RLM-RS even in the case of not configured with the CORESET pool index to ensure compatibility with Rel. 15.

### {Variations of First and Second CORESETs}

In each of the embodiments described above, the first CORESET corresponds to the CORESET that is not provided with the CORESET pool index or is provided with the CORESET pool index of value = 0, and the second CORESET corresponds to the CORESET provided with the CORESET pool index of value = 1, but the embodiments are not limited thereto.

For example, the first CORESET may be interpreted as the CORESET not provided with the CORESET pool index, or the second CORESET may be interpreted as the CORESET provided with the CORESET pool index of value = 1.

For example, the first CORESET may be interpreted as the CORESET not provided with the CORESET pool index, or the second CORESET may be interpreted as the CORESET provided with the CORESET pool index (having any value).

In the present disclosure, the second CORESET and the latest CORESET may be interchangeably interpreted.

In the present disclosure, "in a case that the UE is not provided with a CORESET pool index for one or more first CORESETs or is provided with a CORESET pool index of value = 0 and is provided with a CORESET pool index of value = 1 for one or more second CORESETs on an active DL BWP of a serving cell" ("if the UE is not provided CORESETPoollndex or is provided CORESETPoollndex with value 0 for one or more first CORESETs and is provided CORESETPoollndex with value 1 for one or more second CORESETs on an active DL BWP of a serving cell") and "in a case that the UE is not provided with a CORESET pool index or is provided with a CORESET pool index of value = 0 for one or more first CORESETs on an active DL BWP of a serving cell, and is provided with a CORESET pool index of value = 1 for one or more the second CORESETs on an active DL BWP of a serving cell" ("if the UE is not provided CORESETPoollndex or is provided CORESETPoollndex with value 0 for one or more first CORESETs on an active DL BWP of a serving cell, and is provided CORESETPoollndex with value 1 for one or more second CORESETs on an active DL BWP of a serving cell") may be interchangeably interpreted.

In the present disclosure, a serving cell and one or more serving cells may be interchangeably interpreted. In the present disclosure, an active DL BWP and one or more active DL BWPs may be interchangeably interpreted. In the present disclosure, "an active DL BWP of a serving cell" to which the first CORESET belongs (or with which the first CORESET is associated)" may be the same as or different from "an active DL BWP of a serving cell" to which the second CORESET belongs (or with which the second CORESET is associated)."

### <Other Embodiments>

The UE may report UE capability information including at least one of the following items to a network.
- Whether to support the RLM-RS selection operation according to at least one of the embodiments described above.
- The number (maximum number) of RLM-RSs supported by the RLM-RS selection operation. The number of RLM-RSs may be at least one of the number per BWP, the number per CC, the number per band, and the number per UE.
- The number (maximum number) of CORESET pool indices supported by the RLM-RS selection operation. The number of CORESET pool indices may be at least one of the number per BWP, the number per CC, the number per band, and the number per UE.
- The number (maximum number) of CORESETs supported by the RLM-RS selection operation. The number of CORESETs may be at least one of the number per BWP, the number per CC, the number per band, and the number per UE.
- Whether to support the simultaneous reception of a plurality of DCIs (multi-DCI, multi-PDCCH) (for example, whether to permit detection of two or more DCI formats for a plurality of PDCCHs received in symbols the first symbols of which are the same in the same slot).
- Whether to support the simultaneous reception of a plurality of DCls not in a particular QCL relation (for example, not having the QCL type D).
- Whether to support the NCJT of the PDSCH (in other words, the simultaneous reception of a plurality of PDSCHs (codewords) not in a particular QCL relation (for example, not having the QCL type D)).
- Whether to support the single DCI.
- Whether to support the multi-DCI.
- The number of DCIs the UE can detect (or decode) in a given PDCCH monitoring period or the same symbol (for example, an OFDM symbol).
- The number of DCls not in a particular QCL relation (for example, not having the QCL type D) the UE can detect (or decode) in a given PDCCH monitoring period or the same symbol (for example, an OFDM symbol).
- The number of PDSCHs (or codewords) the UE can detect (or decode) in the same symbol (for example, an OFDM symbol).
- The number of PDSCHs (or codewords) not in a particular QCL relation (for example, not having the QCL type D) the UE can detect (or decode) in the same symbol (for example, an OFDM symbol).
- The number or maximum number of RLM-RSs selected by the UE in the case of not being provided with the RLM-RS.

In a case that the UE reports at least one of the UE capabilities, the UE may expect to apply (or to be configured to apply) at least one of the embodiments described above. The network may notify the UE reporting at least one of the UE capabilities described above of information enabling the operation based on at least one of the embodiments described above.

The UE may expect to select the RLM-RS using a value in a range of the value (numeral) reported by the UE capability information.

In each of the embodiments described above, at least any of the followings may be applied.

The operation in each of the embodiments may be applied only in a particular frequency range (for example, Frequency Range 2 (FR2), other than FR1). Such an operation can reduce the complexity of the UE.

The UE may expect that the number of RLM-RSs, N_{RLM}, is not larger than the number of CORESETs.

In a case that N_{RLM} is larger than the number of CORESETs, the UE may determine the RLM-RSs up to the number of active TCI states by using the number of active TCI states (the number of TCI states activated by the MAC CE) instead of N_{RLM}. It is conceivable that the number of active TCI states is larger than the number of CORESETs.

The UE may use the RLM-RS determination rules different between a case of using the single TRP and a case of using the multi-TRP.

The UE may change the RLM-RS determination rule, based on at least one of the RRC signaling, the MAC CE, and the DCI. For example, the RLM-RS determination rules may be different between a case that at least one of following conditions is satisfied and a case that the condition is not satisfied, the conditions being a case of receiving the DCI scheduling the PDSCH, a case of simultaneously receiving the PDSCHs from a plurality of TRPs, and a case that the UE includes the TCI state per TRP.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

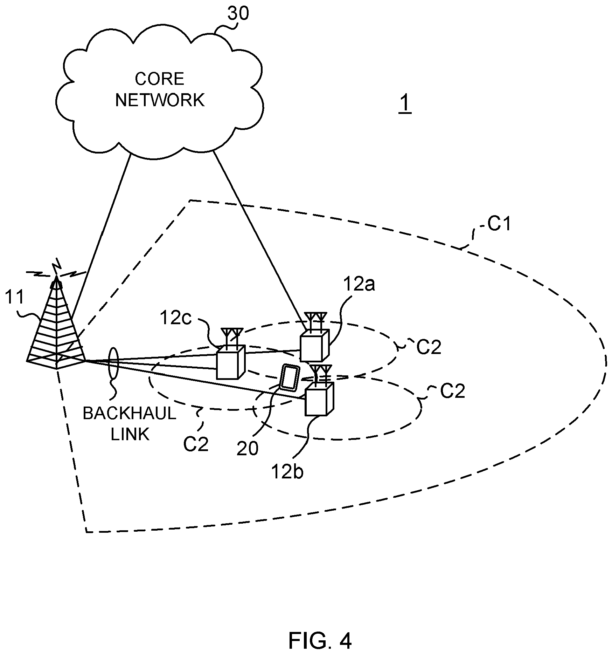

FIG. 4 is a diagram to illustrate an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect illustrated in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

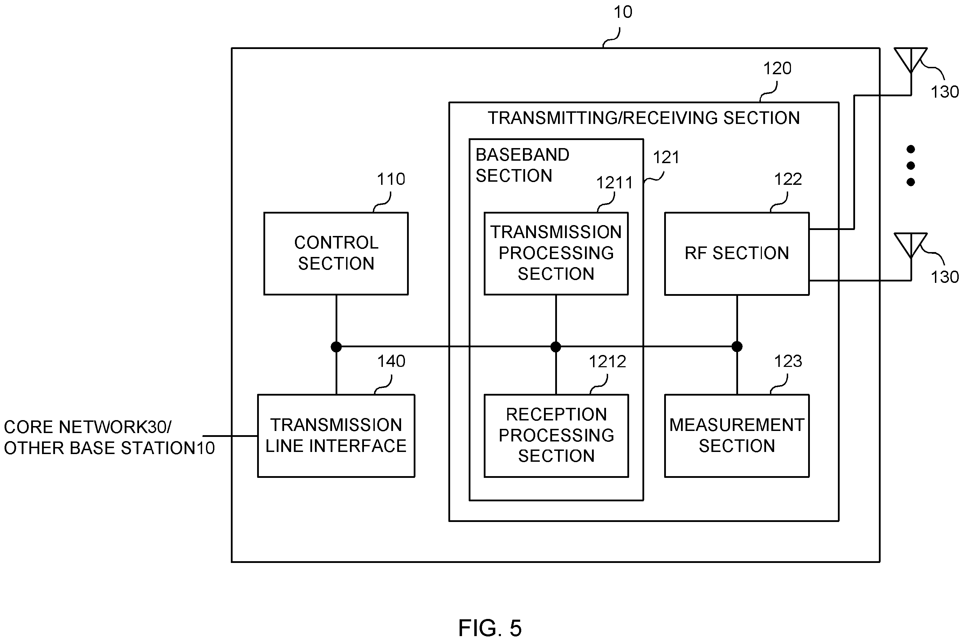

FIG. 5 is a diagram to illustrate an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily illustrates functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate a bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The control section 110 may use, for radio link monitoring, one or more reference signals for active transmission configuration indication (TCI) states associated with one or more first control resource sets (CORESETs), in a case that a CORESET pool index of 0 is not configured for the one or more first CORESETs, a CORESET pool index having a value other than 0 is configured for one or more second CORESETs, and a radio link monitoring-reference signal (RLM-RS) is not configured. The transmitting/receiving section 120 may transmit the one or more reference signals.

### (User Terminal)

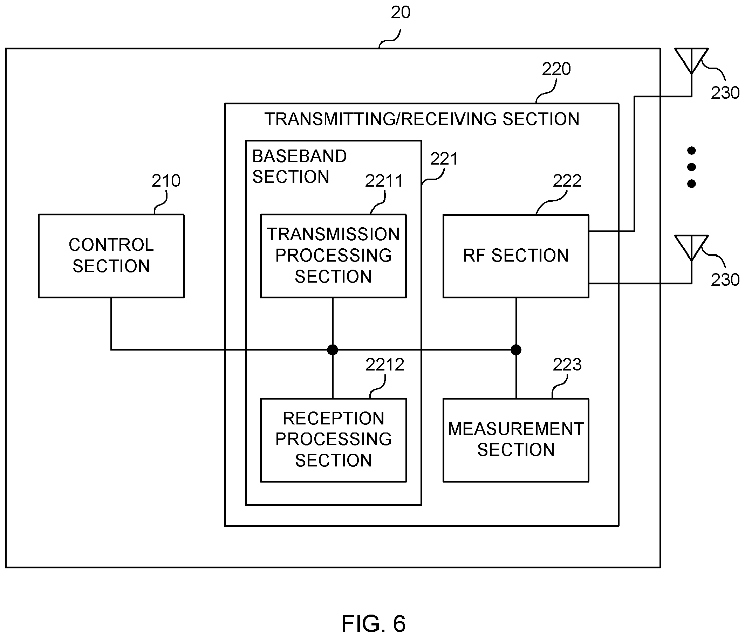

FIG. 6 is a diagram to illustrate an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily illustrates functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, and digital-to-analog conversion, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

Note that the control section 210 may use, for radio link monitoring, one or more reference signals for active transmission configuration indication (TCI) states associated with one or more first control resource sets (CORESETs), in a case that a CORESET pool index of 0 is not configured for the one or more first CORESETs, a CORESET pool index having a value other than 0 is configured for one or more second CORESETs, and a radio link monitoring-reference signal (RLM-RS) is not configured (the procedures 1 and 2). The transmitting/receiving section 220 may receive the one or more reference signals.

In a case that a maximum number of synchronization signal block candidates per half frame is four, the control section 210 may select the one or more reference signals from the one or more first CORESETs in an order of corresponding search space sets from the lowest monitoring periodicity (the procedure 4).

In a case that the one or more first CORESETs are more than one CORESETs and are associated with search space sets having the same monitoring periodicity, the control section 210 may select the one or more reference signals from the first CORESETs in an order from the highest CORESET index (the procedure 4).

The CORESET pool index configured for the second CORESETs may be 1.

### (Hardware Structure)

Note that the block diagrams that have been used to describe the above embodiments illustrate blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

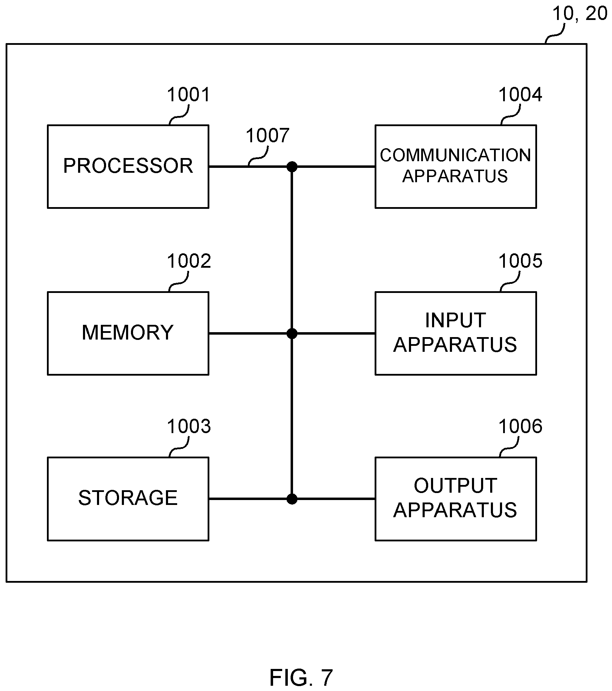

For example, a base station, a user terminal, and so on according to one embodiment of the present disclosure may function as a computer that executes the processes of the radio communication method of the present disclosure. FIG. 7 is a diagram to illustrate an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses illustrated in the drawings, or may be configured not to include part of apparatuses.

For example, although only one processor 1001 is illustrated, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTls (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a particular location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the particular orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a control section that uses, for radio link monitoring, one or more reference signals for active transmission configuration indication (TCI) states associated with one or more first control resource sets (CORESETs), in a case that a CORESET pool index is not configured for the one or more first CORESETs, a CORESET pool index is configured for one or more second CORESETs, and a radio link monitoring-reference signal (RLM-RS) is not configured; and
a receiving section that receives the one or more reference signals.

2. The terminal according to claim 1, wherein
in a case that a maximum number of synchronization signal block candidates per half frame is four, the control section selects the one or more reference signals from the one or more first CORESETs in an order of corresponding search space sets from the lowest monitoring periodicity.

3. The terminal according to claim 1, wherein
in a case that the one or more first CORESETs are more than one CORESETs and are associated with search space sets having the same monitoring periodicity, the control section selects the one or more reference signals from the first CORESETs in an order from the highest CORESET index.

4. The terminal according to any one of claims 1 to 3, wherein
the CORESET pool index configured for the one or more second CORESETs is 1.

5. A radio communication method for a terminal, the radio communication method comprising:
using, for radio link monitoring, one or more reference signals for active transmission configuration indication (TCI) states associated with one or more first control resource sets (CORESETs), in a case that a CORESET pool index of 0 is not configured for the one or more first CORESETs, a CORESET pool index having a value other than 0 is configured for one or more second CORESETs, and a radio link monitoring-reference signal (RLM-RS) is not configured; and
receiving the one or more reference signals.

6. A base station comprising:
a control section that uses, for radio link monitoring, one or more reference signals for active transmission configuration indication (TCI) states associated with one or more first control resource sets (CORESETs), in a case that a CORESET pool index of 0 is not configured for the one or more first CORESETs, a CORESET pool index having a value other than 0 is configured for one or more second CORESETs, and a radio link monitoring-reference signal (RLM-RS) is not configured; and
a transmitting section that transmits the one or more reference signals.
